(19) Europäisches Patentamt
European Patent Office
Office européen des brevets

(11) EP 4 755 957 A1

(12) # EUROPEAN PATENT APPLICATION
published in accordance with Art. 153(4) EPC

(43) Date of publication:
**10.06.2026 Bulletin 2026/24**

(21) Application number: **24848612.8**

(22) Date of filing: **19.04.2024**

(51) International Patent Classification (IPC):
***C08J 5/24*** *(2006.01)* ***C08G 59/26*** *(2006.01)*
***C08G 59/40*** *(2006.01)*

(52) Cooperative Patent Classification (CPC):
**C08G 59/26; C08G 59/40; C08J 5/24**

(86) International application number:
**PCT/JP2024/015547**

(87) International publication number:
**WO 2025/027951 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.08.2023 JP 2023125417**

(71) Applicant: **Mitsubishi Chemical Corporation**
**Tokyo 100-8251 (JP)**

(72) Inventors:
- **AKITA, Takuya**
  **Tokyo 100-8251 (JP)**
- **MIYAHARA, Yuki**
  **Tokyo 100-8251 (JP)**

(74) Representative: **Hoffmann Eitle**
**Patent- und Rechtsanwälte PartmbB**
**Arabellastraße 30**
**81925 München (DE)**

(54) **PREPREG AND FIBER-REINFORCED PLASTIC**

(57) The present invention provides, when carbon fibers are used as reinforcing fibers, a prepreg from which a fiber-reinforced plastic having improved strength in a direction perpendicular to the fiber direction can be obtained, and a fiber-reinforced plastic having improved strength in the direction perpendicular to the fiber direction. The prepreg of the present invention contains a matrix resin composition and carbon fibers. The matrix resin composition contains [A]: an isocyanuric acid derivative having a glycidyl group, represented by the following Formula (1) (in Formula (1), $X^1$ to $X^3$ each represent a glycidyl group, an allyl group, an alkyl group, or a hydrogen atom, and at least one of $X^1$ to $X^3$ is a glycidyl group), [B]: a curing agent, [C]: a compound having a (meth) acryloyl group but no glycidyl group, and [D]: an epoxy resin excluding the component [A].

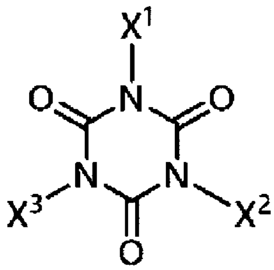

(1)

EP 4 755 957 A1

## Description

### Technical Field

The present invention relates to a prepreg and a fiber-reinforced plastic, and is suitably used for sports and leisure applications, general industrial applications, and aircraft material applications, for example.
The present application claims priority based on Japanese Patent Application No. 2023-125417 filed in Japan on August 1, 2023, the content of which is incorporated herein by reference.

### Background Art

Fiber-reinforced plastics are light-weight, have high strength and high rigidity, and are therefore widely used in various applications ranging from sports and leisure applications to industrial applications such as automobiles and aircrafts. As a method for producing a fiber-reinforced plastic, there is a method of using an intermediate material, that is, a prepreg, in which a reinforcing material made of long fibers (continuous fibers) such as reinforcing fibers is impregnated with a matrix resin. According to this method, the content of the reinforcing fibers in the fiber-reinforced plastic is easily managed, and the fiber content can be increased. A plurality of prepregs can be stacked, and heated and cured to yield a molded article.
Examples of physical properties required for fiber-reinforced plastics include elastic modulus and toughness. For example, Patent Literature 1 discloses a prepreg using an epoxy resin and a matrix resin containing a (meth)acrylic monomer having a specific structure.

### Citation List

### Patent Literature

Patent Literature 1: WO 2022/196624

### Summary of Invention

### Technical Problem

An object of the present invention is to provide, when carbon fibers are used as reinforcing fibers, a prepreg from which a fiber-reinforced plastic having improved strength in a direction perpendicular to the fiber direction can be obtained, and a fiber-reinforced plastic having improved strength in the direction perpendicular to the fiber direction.

### Solution to Problem

The present invention includes the following embodiments.

[1] A prepreg containing a matrix resin composition and carbon fibers, wherein the matrix resin composition contains components [A] to [D]:

[A] an isocyanuric acid derivative having a glycidyl group, represented by Formula (1):

[Chem. 1]

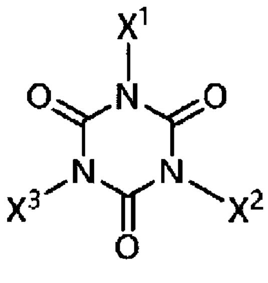

・・・Formula (1)

where $X^1$ to $X^3$ each represent a glycidyl group, an allyl group, an alkyl group, or a hydrogen atom, and at least one of $X^1$ to $X^3$ is a glycidyl group;

[B] a curing agent;
[C] a compound having a (meth)acryloyl group but no glycidyl group; and
[D] an epoxy resin excluding the component [A].

[2]: The prepreg according to [1], wherein the prepreg contains an isocyanuric acid derivative as the component [C].
[3]: The prepreg according to [1] or [2], wherein the prepreg contains from 50 to 200 parts by mass of the component [A] with respect to 100 parts by mass of the component [C].
[4]: The prepreg according to any one of [1] to [3], wherein the prepreg contains from 10 to 30 mass% of the component [A] with respect to a total mass of the components [A] and [D].
[5]: The prepreg according to any one of [1] to [4], wherein, in Formula (1), $X^1$ to $X^3$ are all glycidyl groups.
[6]: The prepreg according to any one of [1] to [5], wherein the prepreg contains a novolac type epoxy resin as the component [D], and the novolac type epoxy resin is contained in an amount of from 20 to 60 mass% with respect to the total mass of the components [A] and [D].
[7]: The prepreg according to [6], wherein the novolac type epoxy resin contains, as a partial backbone, at least one selected from the group consisting of cresol, bisphenol-A, biphenyl, naphthalene, and a derivative of dicyclopentadiene.
[8]: The prepreg according to any one of [1] to [5], wherein the prepreg contains from 10 to 30 mass% of a bisphenol type epoxy resin with respect to the total mass of the components [A] and [D].
[9]: The prepreg according to [8], wherein the bisphenol type epoxy resin contains a bisphenol-F type epoxy resin.
[10]: The prepreg according to any one of [1] to [9], wherein the component [B] contains at least one selected from the group consisting of dicyandiamide, aromatic amines, ureas, and imidazoles.
[11]: The prepreg according to [10], wherein the component [B] contains dicyandiamide.
[12]: The prepreg according to any one of [1] to [11], wherein the prepreg contains 50 mass% or more of a component [B1] having a melting point of 70°C or higher with respect to a total mass of the component [B].
[13]: The prepreg according to any one of [1] to [12], wherein the prepreg contains from 10 to 40 parts by mass of the component [C] with respect to 100 parts by mass of a total of the components [A] and [D].
[14]: The prepreg according to any one of [1] to [13], wherein the component [C] contains an isocyanuric acid derivative having a (meth)acryloyl group, represented by Formula (2):

[Chem. 2]

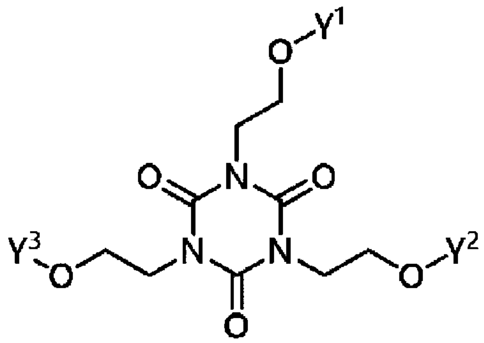

· · · Formula (2)

where $Y^1$ to $Y^3$ each represent a (meth)acryloyl group or a hydrogen atom, and at least one of $Y^1$ to $Y^3$ is a (meth)acryloyl group.
[15]: The prepreg according to [14], wherein, in Formula (2), $Y^1$ to $Y^3$ are all (meth)acryloyl groups.
[16]: The prepreg according to any one of [1] to [15], wherein the matrix resin composition further contains a component [E]:
[E] a radical polymerization initiator.
[17]: The prepreg according to [16], wherein the component [E] contains an organic peroxide.
[18]: The prepreg according to [16] or [17], wherein the component [E] has a 10-hour half-life temperature of 70°C or higher.
[19]: The prepreg according to any one of [1] to [18], wherein the matrix resin composition has a viscosity of 10 Pa·s or more at 70°C.
[20]: The prepreg according to any one of [1] to [19], wherein the prepreg is a unidirectional prepreg in which the carbon fibers aligned unidirectionally are impregnated with the matrix resin composition.
[21]: A fiber-reinforced plastic obtained by curing the prepreg described in any one of [1] to [20].
[22]: The fiber-reinforced plastic according to [21], wherein the fiber-reinforced plastic is tubular.

Advantageous Effects of Invention

According to the present invention, it is possible to produce, when carbon fibers are used as reinforcing fibers, a prepreg from which a fiber-reinforced plastic having improved strength in a direction perpendicular to the fiber direction can be obtained, and a fiber-reinforced plastic having improved strength in the direction perpendicular to the fiber direction. Even when carbon fibers having a high elastic modulus are used as reinforcing fibers, it is possible to produce the fiber-reinforced plastic having improved strength in the direction perpendicular to the fiber direction.

Description of Embodiments

Prepreg

An embodiment of the present invention relates to a prepreg. The prepreg according to the embodiment is composed of a matrix resin composition and carbon fibers, and the matrix resin composition contains the following components [A] to [D]:

[A] an isocyanuric acid derivative having a glycidyl group, represented by the following Formula (1):

[Chem. 3]

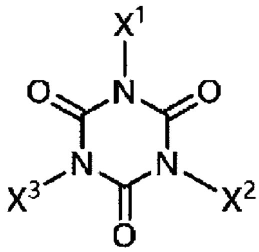

· · · Formula (1)

where $X^1$ to $X^3$ each represent a glycidyl group, an allyl group, an alkyl group, or a hydrogen atom, and at least one of $X^1$ to $X^3$ is a glycidyl group;
[B] a curing agent;
[C] a compound having a (meth)acryloyl group but no glycidyl group; and
[D] an epoxy resin excluding the component [A].
The matrix resin composition may further contain the following component [E], a thermoplastic resin, and an additional additive:
[E] a radical polymerization initiator.

Upon heating of the prepreg, a curing reaction occurs between the component [A] and the component [D], and the component [B]. That is, the matrix resin composition of the fiber-reinforced plastic has a configuration including a polymer of the component [A] and a cured product of the component [D].

Component [A]

The component [A] is an isocyanuric acid derivative represented by the following Formula (1) and having one or more glycidyl groups in the molecule.

[Chem. 4]

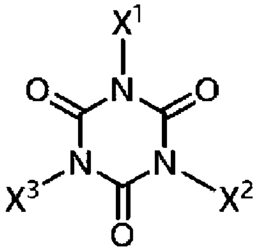

· · · Formula (1)

In Formula (1), $X^1$ to $X^3$ each represent a glycidyl group, an allyl group, an alkyl group, or a hydrogen atom, and at least one of $X^1$ to $X^3$ is a glycidyl group.

In Formula (1), two or more of $X^1$ to $X^3$ are preferably glycidyl groups, and $X^1$ to $X^3$ are more preferably all glycidyl groups, because the strength of the cured product is improved.

The prepreg according to the embodiment can provide a fiber-reinforced plastic having improved strength in the direction perpendicular to the fiber direction. This is presumed to be due to improved adhesiveness between the matrix resin composition and the carbon fibers. Here, the component [A] has an effect of improving the adhesiveness between the carbon fibers and the matrix resin composition, and mechanical properties of the fiber-reinforced plastic is improved. This is considered to be because the isocyanuric acid backbone of the component [A] has a high proportion of heteroatoms that can serve as interaction sites with the carbon fibers, and thus, an intermolecular force between the matrix resin composition and the carbon fibers is enhanced to increase the adhesiveness.

The component [A] is also an epoxy resin, and hereinafter, the component [A] and the component [D] described later are also collectively referred to as an "epoxy resin". The component [A] is preferably used as the epoxy resin because a crosslink density of the cured product increases and rigidity of the molecular structure also increases, and thus, the elastic modulus and the strength of the cured product are improved.

Since the elastic modulus and the strength of the cured product are increased due to increases in the crosslink density and the rigidity of the molecular structure in the cured product, and the adhesiveness to the carbon fibers is also improved, the content of the component [A] in the matrix resin composition is preferably 10 mass% or more, and more preferably 15 mass% or more, with respect to the total mass of the components [A] and [D]. From the viewpoint of improving heat resistance of the cured product, the content of the component [A] is preferably 30 mass% or less, and more preferably 25 mass% or less, with respect to the total mass of the components [A] and [D]. The lower limits and the upper limits of the content of the component [A] can be optionally combined, and for example, the content is preferably from 10 to 30 mass%, and more preferably from 15 to 25 mass%. The matrix resin composition preferably contains from 50 to 200 parts by mass of the component [A] with respect to 100 parts by mass of the component [C] described later.

Examples of the component [A] include triglycidyl isocyanurate, monoallyl diglycidyl isocyanurate, and diallyl monoglycidyl isocyanurate. As the component (A), one of these may be used alone, or two or more thereof may be used in combination. In particular, triglycidyl isocyanurate or monoallyl diglycidyl isocyanurate is preferably used, and triglycidyl isocyanurate is more preferably used, because the strength of the cured product is improved.

Examples of a commercially available product of triglycidyl isocyanurate as the component [A] include TEPIC-G and TEPIC-S (available from Nissan Chemical Corporation). Examples of a commercially available product of monoallyl diglycidyl isocyanurate include MA-DGIC (available from Shikoku Chemicals Corporation). Examples of a commercially available product of diallyl monoglycidyl isocyanurate include DA-MGIC (available from Shikoku Chemicals Corporation).

Component [B]

The component [B] is a curing agent and is not particularly limited as long as the component [B] is a compound that contributes to curing of an epoxy group in the epoxy resin. Examples of the component [B] include amine-based curing agents such as dicyandiamide, aliphatic amines, alicyclic amines, and aromatic amines, as well as ureas, imidazoles, acid anhydrides, phenols, and boron chloride amine complexes. In particular, at least one curing agent selected from the group consisting of dicyandiamide, aromatic amines, ureas, and imidazoles is preferably used because storage stability of the matrix resin composition is enhanced and in addition, the cured product tends to have good mechanical properties.

From the viewpoint of sufficiently advancing curing of the epoxy resin, the content of the component [B] in the matrix resin composition is preferably 1 part by mass or more, and more preferably 2 parts by mass or more, with respect to 100 parts by mass of the total of the components [A] and [D]. From the viewpoint of the storage stability of the matrix resin composition, the content of the component [B] is preferably 60 parts by mass or less, and more preferably 50 parts by mass or less, with respect to 100 parts by mass of the total of the components [A] and [D]. The lower limits and the upper limits of the content of the component [B] can be optionally combined, and for example, the content is preferably from 1 to 60 parts by mass, and more preferably from 2 to 50 parts by mass.

Dicyandiamide has a melting point of about 210°C, and is therefore less compatible with the epoxy resin in a low temperature range. Therefore, when dicyandiamide is used as the curing agent, the storage stability of the matrix resin composition is enhanced. Examples of a commercially available product of dicyandiamide include DICY7 and DICY15 (both available from Mitsubishi Chemical Corporation), and DICYANEX1400F (available from Evonik Japan Co., Ltd.).

When dicyandiamide is used as the component [B], the content of dicyandiamide in the matrix resin composition is preferably 1 part by mass or more, and more preferably 2 parts by mass or more, and is preferably 15 parts by mass or less, and more preferably 10 parts by mass or less, with respect to 100 parts by mass of the total of the components [A] and [D]. The lower limits and the upper limits of the content of dicyandiamide can be optionally combined, and for example, the content is preferably from 1 to 15 parts by mass, and more preferably from 2 to 10 parts by mass.

A ratio of the number of moles of active hydrogen of dicyandiamide to the total number of moles of epoxy groups in

the epoxy resin contained in the matrix resin composition is preferably 0.3 times or more, and more preferably 0.4 times or more, and is preferably 0.9 times or less, and more preferably 0.8 times or less, because the heat resistance and the mechanical properties of the cured product tend to be further enhanced. The lower limits and the upper limits of the ratio of the number of moles of active hydrogen of the dicyandiamide can be optionally combined, and for example, the ratio is preferably from 0.3 to 0.9 times, and more preferably from 0.4 to 0.8 times.

Examples of the aromatic amines include, but are not limited to, 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3',5,5'-tetraisopropyl-4,4'-diaminodiphenylmethane, 3,3'-di-t-butyl-5,5'-diisopropyl-4,4'-diaminodiphenylmethane, 3,3',5,5'-tetra-t-butyl-4,4'-diaminodiphenylmethane, 4,4'-diaminodiphenylmethane, 4,4'-diaminodiphenylsulfone, 3,3'-diaminodiphenylsulfone, 4,4'-methylene-bis[2-isopropyl-6-methylaniline], m-phenylenediamine, m-xylylenediamine, and diethyltoluenediamine. In particular, 4,4'-diaminodiphenylsulfone or 3,3'-diaminodiphenylsulfone is preferably used, which provides a cured product that is enhanced in heat resistance and mechanical properties and further has a small coefficient of linear expansion and a small decrease in heat resistance due to moisture absorption. 4,4'-Diaminodiphenylsulfone is preferable in that a tack life of the prepreg can be retained for a long period of time. 3,3'-Diaminodiphenylsulfone is preferable because the elastic modulus and the strength of the cured product can be increased. Further, 4,4'-diaminodiphenylsulfone and 3,3'-diaminodiphenylsulfone may be blended at the same time. These aromatic amines may be used alone, or may be used in combination with another type of curing agent.

When an aromatic amine is used as the component [B], the content of the aromatic amine in the matrix resin composition is preferably 1 part by mass or more, and more preferably 2 parts by mass or more, and is preferably 60 parts by mass or less, and more preferably 50 parts by mass or less, with respect to 100 parts by mass of the total of the components [A] and [D]. The lower limits and the upper limits of the content of the aromatic amine can be optionally combined, and for example, the content is preferably from 1 to 60 parts by mass, and more preferably from 2 to 50 parts by mass. When the content of the aromatic amine is equal to or more than the lower limit value, the heat resistance and elastic modulus tend to be enhanced. On the other hand, when the content of the aromatic amine is equal to or less than the upper limit value, the toughness tends to be enhanced.

The number of active hydrogen equivalents of an amino group of the aromatic amine is preferably 0.5 times or more, and more preferably 0.6 times or more, and preferably 1.5 times or less, and more preferably 1.4 times or less of the number of epoxy equivalents of the whole epoxy resin contained in the matrix resin composition. The lower limits and the upper limits of the number of the active hydrogen equivalents of the amino group of the aromatic amine can be optionally combined, and for example, the number is preferably from 0.5 to 1.5 times, and more preferably from 0.6 to 1.4 times. By blending these aromatic amines such that the number of active hydrogen equivalents of the amino group of the aromatic amines is within the above range with respect to the number of epoxy equivalents of the whole epoxy resin, the elastic modulus, the toughness and the heat resistance of the cured product tend to be in favorable ranges.

Among the aromatic amines, examples of a commercially available product of 4,4'-diaminodiphenylsulfone include SEIKACURE S (active hydrogen equivalent: 62 g/eq, available from Wakayama Seika Kogyo Co., Ltd.) and SUMICURE S (active hydrogen equivalent: 62 g/eq, available from Sumitomo Chemical Co., Ltd.). Examples of a commercially available product of 3,3'-diaminodiphenylsulfone include 3,3'-DAS (active hydrogen equivalent: 62 g/eq, available from Mitsui Fine Chemicals, Inc.). Examples of a commercially available product of other aromatic amines include MDA-220 (active hydrogen equivalent: 50 g/eq, available from Mitsui Chemicals, Inc.), jER Cure W (active hydrogen equivalent: 45 g/eq, available from Mitsubishi Chemical Corporation), Lonzacure M-DEA (active hydrogen equivalent: 78 g/eq), Lonzacure M-DIPA (active hydrogen equivalent: 92 g/eq), Lonzacure M-MIPA (active hydrogen equivalent: 78 g/eq), and Lonzacure DETDA 80 (active hydrogen equivalent: 45 g/eq) (all available from Lonza Group Ltd.).

The ureas have a dimethylureido group in the molecule, and generate an isocyanate group and dimethylamine by heating at a high temperature, and thus, activate the epoxy group. Examples of the ureas include aromatic dimethylurea in which a dimethylureido group is bonded to an aromatic ring, and aliphatic dimethylurea in which a dimethylureido group is bonded to an aliphatic compound. Among these, aromatic dimethylurea is preferable in that the heat resistance and the flexural strength of the cured product tend to be high.

When a urea is used as the component [B], the content of the urea in the matrix resin composition is preferably 1 part by mass or more, and preferably 15 parts by mass or less, and more preferably 10 parts by mass or less, with respect to 100 parts by mass of the total of the components [A] and [D]. The lower limits and the upper limits of the content of the urea can be optionally combined, and for example, the content is preferably from 1 to 15 parts by mass, and more preferably from 1 to 10 parts by mass. When the content of the urea is equal to or more than the lower limit value, there is a tendency that curing of the epoxy resin contained in the matrix resin composition is accelerated, and the mechanical properties and the heat resistance of the cured product can be increased. On the other hand, when the content of the urea is 15 parts by mass or less, the pot life and the toughness of the cured product tend to be retained at high levels.

As the aromatic dimethylurea, for example, phenyldimethylurea, tolylenebis(dimethylurea), and methylenebis(phenyldimethylurea) are suitably used. Specific examples thereof include 3-phenyl-1,1-dimethylurea (PDMU), 3-(3,4-dichlorophenyl)-1,1-dimethylurea (DCMU), 3-(3-chloro-4-methylphenyl)-1,1-dimethylurea, and 2,4-bis(3,3-dimethylureido)toluene (TBDMU), 4,4'-methylenebis(phenyldimethylurea) (MBPDMU), and dimethylurea obtained from m-xylylenediisocyanate and dimethylamine. Among these, PDMU, DCMU, TBDMU, and MBPDMU are more preferable from the viewpoint of curing acceleration ability and imparting heat resistance to the cured product.

Examples of the aliphatic dimethylurea include dimethylurea obtained from isophorone diisocyanate and dimethylamine, and dimethylurea obtained from hexamethylene diisocyanate and dimethylamine.

These ureas may be used alone, or two or more thereof may be used in combination.

Examples of a commercially available product of ureas include as PDMU, Omicure94 (available from PTI Japan Ltd.), for example. Examples of DCMU include DCMU-99 (available from Hodogaya Chemical Co., Ltd.). Examples of TBDMU include Omicure24 (available from PTI Japan Ltd.) and U-CAT 3512T (available from San-Apro Ltd.). Examples of MBPDMU include Technicure MDU-11 (available from A & C Catalysts, Inc.) and Omicure52 (available from PTI Japan Ltd.). Examples of the aliphatic dimethylurea include U-CAT 3513N (available from San-Apro Ltd.).

The imidazoles have a nitrogen atom having a lone pair in the structure, and can activate an epoxy group, and therefore can promote curing. As the imidazoles, for example, imidazole, an imidazole adduct, an inclusion imidazole, a microencapsulated imidazole, and an imidazole compound coordinated with a stabilizer can be used.

When an imidazole is used as the component [B], the content of the imidazole in the matrix resin composition is preferably 1 part by mass or more, and preferably 15 parts by mass or less, and more preferably 10 parts by mass or less, with respect to 100 parts by mass of the total of the components [A] and [D]. The lower limits and the upper limits of the content of the imidazole can be optionally combined, and for example, the content is preferably from 1 to 15 parts by mass, and more preferably from 1 to 10 parts by mass. When the content of the imidazole is equal to or more than the lower limit value, the curing or curing acceleration effect of the epoxy resin contained in the matrix resin composition, and the heat resistance of the cured product tend to be sufficiently obtained. On the other hand, when the content of the imidazole is equal to or less than the upper limit value, a cured product having more excellent mechanical properties tends to be obtained.

Specific examples of the imidazoles include, but are not limited to, 2-methylimidazole, 2-ethyl-4-methylimidazole, 2-undecylimidazole, 2-heptadecylimidazole, 1,2-dimethylimidazole, 2-phenylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-ethyl-4-methylimidazolium trimellitate, 1-cyanoethyl-2-undecylimidazolium trimellitate, 1-cyanoethyl-2-phenylimidazolium trimellitate, 2,4-diamino-6-(2'-methylimidazolyl-(1'))-ethyl-s-triazine, 2,4-diamino-6-(2'-undecylimidazolyl-(1'))-ethyl-s-triazine, 2,4-diamino-6-(2'-ethyl-4-methylimidazolyl-(1'))-ethyl-s-triazine, 2,4-diamino-6-(2'-methylimidazolyl-(1'))-ethyl-s-triazine/isocyanuric acid adduct, 2-phenylimidazole/isocyanuric acid adduct, 2-methylimidazole/isocyanuric acid adduct, 1-cyanoethyl-2-phenyl-4,5-di(2-cyanoethoxy)methylimidazole, 2-phenyl-4,5-dihydroxymethylimidazole, and 2-phenyl-4-methyl-5-hydroxymethylimidazole. The imidazole subjected to adduct treatment, inclusion treatment with a different molecule, microcapsulation treatment, or coordination with a stabilizer is a modified imidazole. The modification can reduce the activity and accelerate the curing of the epoxy resin in a high temperature range while an enhanced pot life is exhibited in a low temperature range.

These imidazoles may be used alone, or two or more thereof may be used in combination.

Examples of a commercially available product of imidazoles include, but are not limited to, 2E4MZ, 2P4MZ, 2PZ-CN, C11Z-CNS, C11Z-A, 2MZA-PW, 2MAOK-PW, 2P4MHZ-PW, and 2PHZ-PW (all available from Shikoku Chemicals Corporation). Examples of a commercially available product of the imidazole adduct include, but are not limited to, PN-50, PN-50J, PN-40, PN-40J, PN-31, PN-23, and PN-H (all available from Ajinomoto Fine-Techno Co., Inc.), which have a structure in which an imidazole compound is ring-opened and added to the epoxy group of the epoxy resin. Examples of a commercially available product of the inclusion imidazole include, but are not limited to, TIC-188, KM-188, HIPA-2P4MHZ, NIPA-2P4MHZ, TEP-2E4MZ, HIPA-2E4MZ, and NIPA-2E4MZ (all available from Nippon Soda Co., Ltd.). Examples of a commercially available product of the microencapsulated imidazole include, but are not limited to, Novacure HX3721, Novacure HX3722, Novacure HX3742, and Novacure HX3748 (all available from Asahi Kasei E-Materials Corporation), and LC-80 (available from A & C Catalysts, Inc.). The imidazole compound coordinated with a stabilizer can be prepared by combining Cureduct P-0505 (bisphenol-A diglycidyl ether/2-ethyl-4-methylimidazole adduct), which is an imidazole adduct available from Shikoku Chemicals Corporation, with L-07N (a blend of epoxy-phenol-boric acid ester), which is a stabilizer available from Shikoku Chemicals Corporation. The same effect can be obtained by using the above-mentioned various imidazoles or imidazole compounds such as the imidazole adducts, instead of Cureduct P-0505.

Examples of the acid anhydrides include hydrogenated methyl nadic anhydride and methyl hexahydrophthalic anhydride.

The component [B] preferably contains a component [B1] having a melting point of 70°C or higher, and the component [B1] is preferably contained in an amount of 50 mass% or more with respect to the total mass of the component

[B]. When the melting point and the content of the component [B1] are within the above ranges, the epoxy resin and the curing agent are prevented from being compatible with each other in a low temperature range, and immediate reaction between the epoxy resin and the curing agent is easily suppressed. That is, a matrix resin composition having a long pot life can be obtained, and a prepreg having a long working life is easily obtained.

Specific examples of the component [B1] include, but are not limited to, dicyandiamide (melting point: 208°C), 4,4'-diaminodiphenylsulfone (melting point: 175°C), 3,3'-diaminodiphenylsulfone (melting point: 170°C), 4,4'-methylene-bis[2-isopropyl-6-methylaniline] (melting point: 72°C), 4,4'-methylenebis(phenyldimethylurea) (melting point: 216°C), 3-phenyl-1,1-dimethylurea (melting point: 126°C), 3-(3,4-dichlorophenyl)-1,1-dimethylurea (melting point: 159°C), 2,4-bis(3,3-dimethylureido)toluene (melting point: 180°C), 2-phenylimidazole (melting point: 137°C), 2,4-diamino-6-(2'-ethyl-4-methylimidazolyl-(1'))-ethyl-s-triazine (melting point: 248°C), 2,4-diamino-6-(2'-methylimidazolyl-(1'))-ethyl-s-triazine/isocyanuric acid adduct (melting point: 260°C or higher), 2-phenyl-4,5-dihydroxymethylimidazole (melting point: 230°C or higher), and 2-phenyl-4-methyl-5-hydroxymethylimidazole (melting point: 191°C).

Component [C]

The component [C] is a compound having one or more acryloyl groups in the molecule, but having no glycidyl group in the molecule. The component [C] contributes to the improvements in the elastic modulus and the toughness of the cured product.

Epoxy resins are known as materials having excellent adhesiveness, and the adhesiveness to carbon fibers is usually optimized by adjusting the types of the epoxy resins and curing agents, but it is not easy to adhere to carbon fibers having a high elastic modulus in which crystalline portions are highly developed. Therefore, the adhesiveness between the matrix resin composition and the carbon fibers having a high elastic modulus is not sufficient, and the strength in the direction perpendicular to the fiber direction of the fiber-reinforced plastic using the carbon fibers having a high elastic modulus as the reinforcing fibers tends to be low. By blending the component [C] into the matrix resin composition containing the component [A], the adhesiveness can be improved even to high modulus carbon fibers which are difficult to adhere. Further, by combining the component [A] and the component [C], the same effect can be obtained even for medium modulus carbon fibers or standard modulus carbon fibers. Although the detailed mechanism is not clear, it is considered that the interaction between the isocyanuric acid backbone in the component [A] and the carbon fibers is further enhanced by the presence of the component [C], and thus, the adhesiveness between the carbon fibers and the matrix resin composition is enhanced. In addition, it is considered that the component [A] tends to have low reactivity due to the high crystallinity, but that coexistence of the component [C] having low crystallinity facilitates dissolution of the crystal of the component [A], and thus, the reactivity is enhanced. Further, it is considered that the wettability of the component [A] to surfaces of the carbon fibers is improved by the fact that the crystal of the component [A] is easily dissolved. That is, it is considered that in the coexistence of the component [C], the component [A] sufficiently approaches the surfaces of the carbon fibers and then the curing reaction proceeds, and thus, the adhesiveness between the carbon fibers and the matrix resin composition is improved. In addition, the component [C] tends to improve the strength of the cured product, since a polymer of the component [C] forms a rigid network structure.

The content of the component [C] in the matrix resin composition is preferably 10 parts by mass or more, and more preferably 15 parts by mass or more, with respect to 100 parts by mass of the total of the components [A] and [D]. The content of the component [C] is preferably 40 parts by mass or less, and more preferably 35 parts by mass or less with respect to 100 parts by mass of the total of the components [A] and [D]. The lower limits and the upper limits of the content of the component [C] can be optionally combined, and for example, the content is preferably from 10 to 40 parts by mass, and more preferably from 15 to 35 parts by mass. When a blended amount of the component [C] in the matrix resin composition is equal to or more than the lower limit value, the concentration of structures that can serve as interaction sites with the surfaces of the carbon fibers in the matrix resin composition increases, and the dissolution of the component [A] is facilitated, and thus, the adhesiveness to the carbon fibers is improved. On the other hand, when the content of the component [C] is equal to or less than the upper limit value, the crosslink density is appropriate, and the cured product easily maintains the toughness.

The component [C] preferably contains an isocyanuric acid derivative having no glycidyl group in the molecule. Examples of a substituent which the isocyanuric acid derivative may have include an allyl group, an alkyl group, and a hydroxyethyl group. It is considered that when the component [C] contains an isocyanuric acid derivative, the interaction with the carbon fibers is further enhanced, and the adhesiveness between the carbon fibers and the matrix resin composition is increased. In addition, as described above, it is considered that the component [A] tends to have low reactivity due to the high crystallinity of the component [A], but that the coexistence of the component [C] having a structure similar to that of the component [A] further facilitates dissolution of the crystal of the component [A], and thus, the reactivity is enhanced. As a result, it is considered that the adhesiveness between the carbon fibers and the matrix resin composition is further improved.

From the viewpoint of the adhesiveness between the carbon fibers and the matrix resin composition, the

component [C] more preferably contains an isocyanuric acid derivative represented by the following Formula (2).

[Chem. 5]

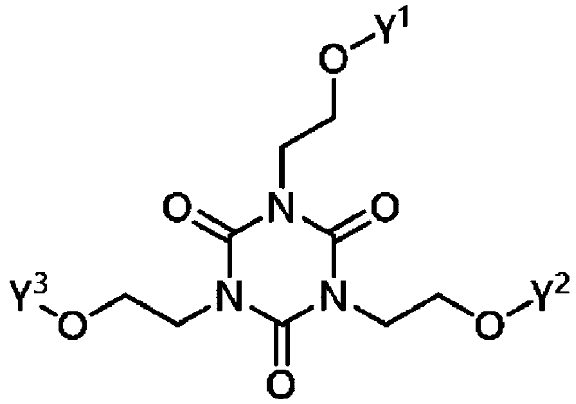

• • • Formula (2)

In Formula (2), $Y^1$ to $Y^3$ each represent a (meth)acryloyl group or a hydrogen atom, and at least one of $Y^1$ to $Y^3$ is a (meth)acryloyl group.

"(Meth)acryloyl group" means an acryloyl group and a methacryloyl group.

In Formula (2), two or more of $Y^1$ to $Y^3$ are preferably (meth)acryloyl groups, and $Y^1$ to $Y^3$ are more preferably all (meth)acryloyl groups, because the strength of the cured product is improved.

When the component [C] contains an isocyanuric acid derivative, examples of the isocyanuric acid derivative include tris-(2-(meth)acryloxyethyl) isocyanurate, bis-(2-acryloxyethyl) isocyanurate, and mono-(2-acryloxyethyl) isocyanurate, which are ester compounds produced by reacting from 1 to 3 molecules of (meth)acrylic acid with tris(2-hydroxyethyl) isocyanurate. One of these may be used alone, or two or more thereof may be used in combination. In particular, tris-(2-(meth)acryloxyethyl) isocyanurate and bis-(2-acryloxyethyl) isocyanurate are preferably used, and tris-(2-(meth)acryloxyethyl) isocyanurate is more preferably used, because the cured product has excellent strength.

Examples of a commercially available product of tris-(2-(meth)acryloxyethyl) isocyanurate include A-9300S (available from Shin-Nakamura Chemical Co., Ltd.). Examples of a commercially available product of bis-(2-acryloxyethyl) isocyanurate include ARONIX M-215 (available from Toagosei Co., Ltd.). Examples of a commercially available product of a mixture of tris-(2-(meth)acryloxyethyl) isocyanurate and bis-(2-acryloxyethyl) isocyanurate include ARONIX M-313 and ARONIX M-315 (both available from Toagosei Co., Ltd.).

Examples of the component [C] other than the isocyanuric acid derivative include a monofunctional (meth)acrylic monomer and a bifunctional or higher functional (meth)acrylic monomer (sometimes referred to as a polyfunctional (meth) acrylic monomer). These monomers and the isocyanuric acid derivative may be used in combination as the component [C].

Examples of the monofunctional (meth)acrylic monomer include (meth)acrylic acid esters such as 2-hydroxyethyl (meth)acrylate, 2-hydroxypropyl (meth)acrylate, 4-hydroxybutyl (meth)acrylate, 4-hydroxybenzyl (meth)acrylate, 4-hydroxyphenyl (meth)acrylate, cyclohexanedimethanol mono(meth)acrylate, tetrahydrofurfuryl (meth)acrylate, phenoxyethyl (meth)acrylate, cyclohexyl (meth)acrylate, isobornyl (meth)acrylate, norbornyl (meth)acrylate, 2-(meth)acryloyloxymethyl-2-methylbicycloheptane, adamantyl (meth)acrylate, benzyl (meth)acrylate, phenyl (meth)acrylate, dicyclopentenyl (meth)acrylate, dicyclopentanyl (meth)acrylate, tetracyclododecanyl (meth)acrylate, methyl (meth)acrylate, ethyl (meth)acrylate, butyl (meth)acrylate, pentyl (meth)acrylate, hexyl (meth)acrylate, heptyl (meth)acrylate, octyl (meth) acrylate, nonyl (meth)acrylate, decyl (meth)acrylate, undecyl (meth)acrylate, dodecyl (meth)acrylate, icosyl (meth) acrylate, 2-methoxyethyl (meth)acrylate, 3-methoxybutyl (meth)acrylate, methoxytriethylene glycol (meth)acrylate, butoxyethyl (meth)acrylate, methoxydipropylene glycol (meth)acrylate, polyethylene glycol (meth)acrylate, polypropylene glycol (meth)acrylate, polyethylene glycol monomethyl ether (meth)acrylate, polypropylene glycol monomethyl (meth)acrylate, 4-acryloyloxymethyl-2-methyl-2-ethyl-1,3-dioxolane, 4-acryloyloxymethyl-2-methyl-2-isobutyl-1,3-dioxolane, o-phenylphenol (meth)acrylate, ethoxylated o-phenylphenol (meth)acrylate, N-(meth)acryloyloxyethylhexahydrophthalimide, paracumylphenol (meth)acrylate, ethoxylated paracumylphenol (meth)acrylate, and trimethylolpropane formal (meth)acrylate, and (meth)acrylamides such as acrylamide, N,N-dimethylacrylamide, N,N-dimethylmethacrylamide, N-methylolacrylamide, N-methoxymethylacrylamide, N-butoxymethylacrylamide, N-t-butylacrylamide, N-benzyl (meth)acrylamide, N-phenyl (meth)acrylamide, N-(4-hydroxybenzyl) (meth)acrylamide, N-(4-hydroxyphenyl) (meth)acrylamide, acryloylmorpholine, hydroxyethylacrylamide, and methylenebisacrylamide. From the viewpoint of reducing the volatility of the monomer and improving the toughness of the cured product, a monofunctional (meth)acrylic monomer having one or more oxyethylene groups in the molecule or a monofunctional (meth)acrylic monomer having one or more

cyclic backbones in the molecule is preferable, and a monofunctional (meth)acrylic monomer having one or more oxyethylene groups and one or more cyclic backbones in the molecule is more preferable.

Examples of the bifunctional (meth)acrylic monomer include diols such as ethylene glycol, diethylene glycol, triethylene glycol, tetraethylene glycol, propylene glycol, dipropylene glycol, tripropylene glycol, tetrapropylene glycol, 1,3-butylene glycol, 1,4-butanediol, 1,5-pentanediol, neopentyl glycol, 3-methyl-1,5-pentanediol, 2,4-diethyl-1,5-pentanediol, 1,6-hexanediol, 1,9-nonanediol, 2-methyl-1,8-octanediol, 1,10-decanediol, neopentyl glycol hydroxypivalate, tricyclodecanedimethanol, cyclohexanedimethanol, bisphenol-A, hydrogenated bisphenol-A, bisphenol-F, dioxane glycol, and bisphenoxyfluoreneethanol, and di(meth)acrylates obtained by esterifying, with (meth)acrylic acid, diols obtained by adding ethylene oxide, propylene oxide, or caprolactone to these diols. From the viewpoint of achieving a favorable balance of the elastic modulus, the strength, and the toughness of the cured product, a bifunctional (meth)acrylic monomer having one or more oxyethylene groups in the molecule or a bifunctional (meth)acrylic monomer having one or more cyclic backbones in the molecule is preferable, and a bifunctional (meth)acrylic monomer having one or more oxyethylene groups and one or more cyclic backbones in the molecule is more preferable.

Examples of the trifunctional (meth)acrylic monomer include triols and tetraols such as trimethylolpropane, tris(2-hydroxyethyl) isocyanurate, glycerol, and pentaerythritol, and tri(meth)acrylates obtained by esterifying, with (meth) acrylic acid, triols or tetraols obtained by adding for example, ethylene oxide, propylene oxide, or caprolactone to these triols and tetraols. From the viewpoint of achieving a favorable balance of the elastic modulus, strength, and the toughness of the cured product, a trifunctional (meth)acrylic monomer having one or more oxyethylene groups in the molecule or a trifunctional (meth)acrylic monomer having one or more cyclic backbones in the molecule is preferable, and a trifunctional (meth)acrylic monomer having one or more oxyethylene groups and one or more cyclic backbones in the molecule is more preferable.

Examples of the tetrafunctional or higher functional (meth)acrylic monomer include polyols such as ditrimethylolpropane, pentaerythritol, dipentaerythritol, and tripentaerythritol, and poly (meth)acrylates obtained by esterifying, with (meth)acrylic acid, polyols obtained by adding ethylene oxide, propylene oxide, or caprolactone to these polyols. From the viewpoint of achieving a favorable balance of the elastic modulus, the strength, and the toughness of the cured product, a tetrafunctional or higher functional (meth)acrylic monomer having one or more oxyethylene groups in the molecule or a tetrafunctional or higher functional (meth)acrylic monomer having one or more cyclic backbones in the molecule is preferable, and a tetrafunctional or higher functional (meth)acrylic monomer having one or more oxyethylene groups and one or more cyclic backbones in the molecule is more preferable.

An oligomer or prepolymer having a radically polymerizable double bond may be contained. Specific examples thereof include macromonomers, acrylic acrylates, epoxy acrylates, urethane acrylates, and polyester acrylates. One of these may be used alone, or two or more thereof may be used in combination.

Component [D]

The component [D] is an epoxy resin, and is not particularly limited as long as the component [D] is a compound having an epoxy group. However, the component [D] is an epoxy resin excluding the component [A]. Examples of the component [D] include a glycidylamine type epoxy resin, a novolac type epoxy resin, and a bisphenol type epoxy resin.

Glycidylamine Type Epoxy Resin

The use of the glycidylamine type epoxy resin as the component [D] is preferred because the increase in crosslink density of the cured product improves the elastic modulus, the strength and the heat resistance. In particular, from the viewpoint that the cured product exhibits high elastic modulus, strength, and heat resistance, a trifunctional or higher functional glycidylamine type epoxy resin is preferable.

Since the elastic modulus and the strength of the cured product increase as the crosslink density increases, the content of the glycidylamine type epoxy resin in the matrix resin composition is preferably 10 mass% or more, and more preferably 15 mass% or more, with respect to the total mass of the components [A] and [D]. The content of the glycidylamine type epoxy resin is preferably 40 mass% or less, and more preferably 35 mass% or less, with respect to the total mass of the components [A] and [D], because the toughness of the cured product is improved. The lower limits and the upper limits of the content of the glycidylamine type epoxy resin can be optionally combined, and for example, the content is preferably from 10 to 40 mass%, and more preferably from 15 to 35 mass%.

Examples of the glycidylamine type epoxy resin include diglycidyl aniline, diglycidyl toluidine, triglycidyl aminophenol, triglycidyl aminocresol, tetraglycidyl diaminodiphenylmethane, and tetraglycidyl-m-xylenediamine. One of these may be used alone, or two or more thereof may be used in combination. In particular, triglycidyl aminophenol or triglycidyl aminocresol is preferably used, and triglycidyl-m-aminophenol is more preferably used, from the viewpoint of achieving a favorable balance between the elastic modulus and the toughness of the cured product.

Among the glycidylamine type epoxy resins, examples of a commercially available product of diglycidyl aniline

include GAN (available from Nippon Kayaku Co., Ltd.). Examples of a commercially available product of diglycidyl toluidine include GOT (available from Nippon Kayaku Co., Ltd.). Examples of a commercially available product of triglycidyl-m-aminophenol include YH-513 (available from NIPPON STEEL Chemical & Material Co., Ltd.) and ARALDITE MY0600 and ARALDITE MY0610 (both available from Huntsman Advanced Materials). Examples of a commercially available product of triglycidyl-p-aminophenol include jER630 (available from Mitsubishi Chemical Corporation), YH-523 (available from NIPPON STEEL Chemical & Material Co., Ltd.), and ARALDITE MY0500 and ARALDITE MY0510 (both available from Huntsman Advanced Materials). Examples of a commercially available product of triglycidyl aminocresol include SUMI-EPOXY ELM-100 (available from Sumitomo Chemical Co., Ltd.). Examples of a commercially available product of tetraglycidyl diaminodiphenylmethane include jER604 (available from Mitsubishi Chemical Corporation), YH-404 (available from NIPPON STEEL Chemical & Material Co., Ltd.), SUMI-EPOXY ELM-434 (available from Sumitomo Chemical Co., Ltd.), and ARALDITE MY720 and ARALDITE MY721 (both available from Huntsman Advanced Materials). Examples of a commercially available product of tetraglycidyl-m-xylenediamine include TETRAD-X (available from Mitsubishi Gas Chemical Company, Inc.).

Novolac Type Epoxy Resin

The use of the novolac type epoxy resin as the epoxy resin is preferred because the crosslink density of the cured product increases, and thus the elastic modulus, the strength, and the heat resistance are improved.

Since the elastic modulus, the strength, and the heat resistance of the cured product are improved as the crosslink density increases, the content of the novolac type epoxy resin in the matrix resin composition is preferably 20 mass% or more, and more preferably 25 mass% or more, with respect to the total mass of the components [A] and [D]. The content of the novolac type epoxy resin is preferably 60 mass% or less, and more preferably 55 mass% or less, with respect to the total mass of the components [A] and [D], because the toughness of the cured product is improved. The lower limits and the upper limits of the content of the novolac type epoxy resin can be optionally combined, and for example, the content is preferably from 20 to 60 mass%, and more preferably from 25 to 55 mass%.

Examples of the novolac type epoxy resin include a phenol novolac type epoxy resin, a cresol novolac type epoxy resin, a bisphenol-A novolac type epoxy resin, a biphenyl aralkyl type epoxy resin, a naphtholcresol novolac type epoxy resin, a trisphenolmethane type epoxy resin, and a dicyclopentadiene type epoxy resin. One of these may be used alone, or two or more thereof may be used in combination. From the viewpoint of excellent balance between the elastic modulus and the toughness of the cured product, it is preferable to use a novolac type epoxy resin containing, as a partial backbone, at least one selected from the group consisting of derivatives of cresol, bisphenol-A, biphenyl, naphthalene, and dicyclopentadiene, and it is more preferable to use a novolac type epoxy resin containing, as a partial backbone, at least one selected from the group consisting of cresol, bisphenol-A, and biphenyl.

Among the novolac type epoxy resins, examples of a commercially available product of the phenol novolac type epoxy resin include jER152 and jER154 (both available from Mitsubishi Chemical Corporation), EPICLON N-740, EPICLON N-770, and EPICLON N-775 (all available from DIC Corporation), and YDPN-638 (available from NIPPON STEEL Chemical & Material Co., Ltd.). Examples of a commercially available product of the cresol novolac type epoxy resin include EPICLON N-660, EPICLON N-670, EPICLON N-680, and EPICLON N-690 (all available from DIC Corporation). Examples of a commercially available product of the bisphenol-A novolac type epoxy resin include jER 157S70 (available from Mitsubishi Chemical Corporation), and EPICLON N-865 and EPICLON N-885 (both available from DIC Corporation). Examples of a commercially available product of the biphenyl aralkyl type epoxy resin include NC-3100, NC-3000-L, NC-3000, NC-3000-H, and NC-3500 (all available from Nippon Kayaku Co., Ltd.). Examples of a commercially available product of the naphtholcresol novolac type epoxy resin include NC-7000L, NC-7000H, and NC-7300L (all available from Nippon Kayaku Co., Ltd.). Examples of a commercially available product of the trisphenolmethane type epoxy resin include jER 1032H60 (available from Mitsubishi Chemical Corporation), EPPN-501H, EPPN-501HY, EPPN-502H, and EPPN-503 (all available from Nippon Kayaku Co., Ltd.). Examples of a commercially available product of the dicyclopentadiene type epoxy resin include EPICLON HP-7200L, EPICLON HP-7200, EPICLON HP-7200H, and EPICLON HP-7200HHH (all available from DIC Corporation), and XD-1000-2L, XD-1000, and XD-1000-H (all available from Nippon Kayaku Co., Ltd.).

Bisphenol Type Epoxy Resin

The use of the bisphenol type epoxy resin as the epoxy resin is preferable, because the crosslink density of the cured product does not become too high, and therefore a cured product having an excellent balance between the elastic modulus and the toughness is obtained.

From the viewpoint of the toughness of the cured product, the content of the bisphenol type epoxy resin in the matrix resin composition is preferably 10 mass% or more, and more preferably 15 mass% or more, with respect to the total mass of the components [A] and [D]. From the viewpoint of the strength and the elastic modulus of the cured product, the

content of the bisphenol type epoxy resin is preferably 40 mass% or less, and more preferably 35 mass% or less, with respect to the total mass of the components [A] and [D]. The lower limits and the upper limits of the content of the bisphenol type epoxy resin can be optionally combined, and for example, the content is preferably from 10 to 40 mass%, and more preferably from 15 to 35 mass%.

Examples of the bisphenol type epoxy resin include a bisphenol-A type epoxy resin, a bisphenol-F type epoxy resin, a bisphenol S type epoxy resin, and epoxy resins obtained by modifying these epoxy resins with isocyanate. One of these may be used alone, or two or more thereof may be used in combination. In particular, from the viewpoint of an excellent balance between the elastic modulus and the toughness of the cured product, it is preferable to use a bisphenol-A type epoxy resin, a bisphenol-F type epoxy resin, and an epoxy resin obtained by modifying these epoxy resins with an isocyanate, and it is more preferable to use a bisphenol-F type epoxy resin.

Examples of a commercially available product of bisphenol-A-type epoxy resins having a molecular weight of 500 or less and being liquid at 25°C among the bisphenol type epoxy resins include jER827 and jER828 (both available from Mitsubishi Chemical Corporation), YD-127 and YD-128 (both available from NIPPON STEEL Chemical & Material Co., Ltd.), EPICLON840 and EPICLON850 (both available from DIC Corporation), and D.E.R331 and D.E.R332 (both available from THE DOW CHEMICAL COMPANY). Examples of a commercially available product of bisphenol-F type epoxy resins having a molecular weight of 500 or less and being liquid at 25°C include jER806 and jER807 (both available from Mitsubishi Chemical Corporation), YDF-170 (available from NIPPON STEEL Chemical & Material Co., Ltd.), EPICLON830 and EPICLON835 (both available from DIC Corporation), and D.E.R354 (available from THE DOW CHEMICAL COMPANY). Examples of a commercially available product of bisphenol-A-type epoxy resins having a molecular weight of 500 or more and being semi-solid or solid at 25°C include jER1001, jER1002, jER1004, jER1007, and jER1009 (all available from Mitsubishi Chemical Corporation), EPICLON2050, EPICLON3050, EPICLON4050, and EPICLON7050 (all available from DIC Corporation), and YD-011, YD-012, YD-013, YD-014, YD-902, YD-903N, YD-904, YD-907, YD-7910, and YD-6020 (all available from NIPPON STEEL Chemical & Material Co., Ltd.). Examples of bisphenol-F type epoxy resins having a molecular weight of 500 or more and being semi-solid or solid at 25°C include jER4004P, jER4005P, jER4007P, and jER4010P (all available from Mitsubishi Chemical Corporation), and YDF-2001, YDF-2004, and YDF-2005RD (all available from NIPPON STEEL Chemical & Material Co., Ltd.). Examples of isocyanate-modified epoxy resins having a molecular weight of 500 or more and being semi-solid or solid at 25°C include ACR1348 (available from ADEKA Corporation), DER852 and DER858 (both available from THE DOW CHEMICAL COMPANY), TSR-400 (available from DIC Corporation), and YD-952 (available from NIPPON STEEL Chemical & Material Co., Ltd.).

Additional Epoxy Resin

The matrix resin composition may contain one or more additional epoxy resins besides the above-described epoxy resins. Examples of the additional epoxy resins include an epoxy resin having a biphenol backbone, an epoxy resin having a naphthalene backbone, an epoxy resin having a fluorene backbone, a resorcinol type epoxy resin, and a pyrogallol type epoxy resin.

Examples of a commercially available product of the epoxy resin containing a biphenol backbone include jER YX4000 and jER YL6121HA (both available from Mitsubishi Chemical Corporation). Examples of a commercially available product of the epoxy resin containing a naphthalene backbone include EPICLON HP-4032SS, EPICLON HP-4700, EPICLON HP-4710, and EPICLON HP-4770 (all available from DIC Corporation). Examples of a commercially available product of the epoxy resin having a fluorene backbone include OGSOL PG-100, OGSOL CG-500, OGSOL EG-200, and OGSOL EG-280 (all available from Osaka Gas Chemicals Co., Ltd.). Examples of a commercially available product of resorcinol type epoxy resin include Denacol EX-201 (available from Nagase ChemteX Corporation). Examples of a commercially available product of the pyrogallol type epoxy resin include EPICLON EXA-7190 (available from DIC Corporation).

Average Epoxy Equivalent

The average epoxy equivalent of the epoxy resin as a whole, that is, the components [A] and [D], can be, for example, from 100 to 400 g/eq. From the viewpoint of the toughness of the cured product, the average epoxy equivalent of the epoxy resin as a whole is preferably 150 g/eq or more, more preferably 160 g/eq or more, and even more preferably 170 g/eq or more. From the viewpoint of the heat resistance of the cured product, the average epoxy equivalent of the epoxy resin as a whole is preferably 300 g/eq or less, more preferably 290 g/eq or less, and even more preferably 280 g/eq or less.

The epoxy equivalent of the glycidylamine type epoxy resin can be, for example, from 90 to 140 g/eq, and is preferably from 95 to 110 g/eq from the viewpoint of the elastic modulus of the cured product. The epoxy equivalent of the novolac type epoxy resin can be, for example, from 160 to 300 g/eq, and is preferably from 180 to 220 g/eq from the viewpoint of the elastic modulus and the heat resistance of the cured product. The epoxy equivalent of the bisphenol type epoxy resin can be, for example, from 150 to 5000 g/eq, and is preferably from 500 to 3000 g/eq from the viewpoint of the

toughness of the cured product.

When a plurality of epoxy resins are used in combination, the average epoxy equivalent can be calculated as follows. For example, a calculation method will be described using the case where three types of epoxy resins are used in combination as an example. When W1 parts by mass of an epoxy resin 1 having an epoxy equivalent of E1 (g/eq), W2 parts by mass of an epoxy resin 2 having an epoxy equivalent of E2 (g/eq), and W3 parts by mass of an epoxy resin 3 having an epoxy equivalent of E3 (g/eq) are blended, the average epoxy equivalent thereof is determined by the following calculation Equation:

$$\text{Average epoxy equivalent} = (W1 + W2 + W3)/(W1/E1 + W2/E2 + W3/E3).$$

Component [E]

The component [E] is a radical polymerization initiator, and can be used as the radical polymerization initiator for the component [C]. The radical polymerization initiator includes a thermal radical polymerization initiator activated by heat and a photoradical polymerization initiator activated by light irradiation, and the thermal radical polymerization initiator is preferably used because it can generate radicals simultaneously with thermal curing of the epoxy resin. That is, by blending the component [E] in the matrix resin composition, polymerization of the component [C] can be advanced simultaneously with thermal curing of the component [D].

Examples of the thermal radical polymerization initiator include azo-based compounds and organic peroxides, but it is preferable to use organic peroxides which do not generate gas during thermal decomposition and thus can yield a high-quality fiber-reinforced plastic having no voids. As the component [E], at least one peroxide-based compound selected from the group consisting of diacyl peroxide, alkyl peroxyester, peroxydicarbonate, peroxyketal, dialkyl peroxide, and hydroperoxide is preferable.

The content of the component [E] in the matrix resin composition is preferably 0.1 parts by mass or more, and more preferably 0.2 parts by mass or more, with respect to 100 parts by mass of the component [C], in order to sufficiently advance the polymerization of the component [C]. In addition, from the viewpoint of the storage stability of the prepreg, the content of the component [E] is preferably 10 parts by mass or less, and more preferably 9 parts by mass or less, with respect to 100 parts by mass of the component [C]. The lower limits and the upper limits of the content of the component [E] can be optionally combined, and for example, the content is preferably from 0.1 to 10 parts by mass, and more preferably from 0.2 to 9 parts by mass.

From the viewpoint of the storage stability of the prepreg, the 10-hour half-life temperature of the component [E] is preferably 70°C or higher, and more preferably 100°C or higher. Further, in order to sufficiently advance the polymerization of the component [C] in the curing process of the epoxy resin composition, the 10-hour half-life temperature of the component [E] is preferably 150°C or lower.

Specific examples of the component [E] include ketone peroxides such as methyl ethyl ketone peroxide (110°C) and acetylacetone peroxide (130°C); peroxyketals such as 1,1-di(t-butylperoxy)3,3,5-trimethylcyclohexane (95°C), 1,1-di(t-hexylperoxy)cyclohexane (87.1°C), 1,1-di(t-butylperoxy)cyclohexane (90.7°C), 2,2-di(t-butylperoxy)butane (103.1°C), n-butyl 4,4-di(t-butylperoxy)valerate (104.5°C), 2,2-di(4,4-di-t-butylperoxycyclohexyl)propane (94.7°C), 1,1-di(t-hexylperoxy)3,3,5-trimethylcyclohexane (86.7°C), and 1,1-di(t-butylperoxy)cyclododecane (95°C); hydroperoxides such as p-menthane hydroperoxide (128°C), diisopropylbenzene hydroperoxide (145.1°C), 1,1,3,3-tetramethylbutyl hydroperoxide (152.9°C), cumene hydroperoxide (157.9°C), and t-butyl hydroperoxide (166.5°C); dialkyl peroxides such as di(2-t-butylperoxyisopropyl)benzene (119.2°C), dicumyl peroxide (116.4°C), 2,5-dimethyl-2,5-di(t-butylperoxy)hexane (117.9°C), t-butylcumyl peroxide (119.5°C), di-t-hexyl peroxide (116.4°C), di-t-butyl peroxide (123.7°C), and 2,5-dimethyl-2,5-di(t-butylperoxy)hexyne-3 (128.4°C); diacyl peroxides such as diisobutyryl peroxide (32.7°C), di(3,5,5-trimethylhexanoyl) peroxide (59.4°C), lauroyl peroxide (61.6°C), disuccinic acid peroxide (65.9°C), m-toluoyl peroxide (73.1°C), dibenzoyl peroxide (73.6°C), and dioctanoyl peroxide (63°C); peroxydicarbonates such as di-n-propyl peroxydicarbonate (40.3°C), diisopropyl peroxydicarbonate (40.5°C), di(4-t-butylcyclohexyl) peroxydicarbonate (40.8°C), di(2-ethylhexyl) peroxydicarbonate (43.6°C), di-sec-butyl peroxydicarbonate (40.5°C), and di(3-methoxybutyl) peroxydicarbonate (43°C); and peroxyesters such as cumyl peroxyneodecanoate (36.5°C), 1,1,3,3-tetramethylbutyl peroxyneodecanoate (40.7°C), t-hexyl peroxyneodecanoate (44.5°C), t-butyl peroxyneodecanoate (46.4°C), t-hexyl peroxypivalate (53.2°C), t-butyl peroxypivalate (54.6°C), 1,1,3,3-tetramethylbutyl peroxy-2-ethylhexanoate (65.3°C), 2,5-dimethyl-2,5-di(2-ethylhexanoylperoxy)hexane (66.2°C), t-hexyl peroxy-2-ethylhexanoate (69.9°C), t-butyl peroxy-2-ethylhexanoate (72.1°C), t-hexyl peroxy isopropyl monocarbonate (95°C), t-butylperoxy-3,5,5-trimethylhexanoate (97.1°C), t-butylperoxylaurate (98.3°C), t-butylperoxyisopropyl monocarbonate (98.7°C), t-butylperoxy-2-ethylhexyl monocarbonate (99°C), t-hexylperoxybenzoate (99.4°C), 2,5-dimethyl-2,5-di(benzoylperoxy)hexane (99.7°C), t-butylperoxyacetate (101.9°C), t-butylperoxybenzoate (104.3°C), t-butylperoxymaleic acid (96.1°C), and t-butylperoxyisobutyrate (75°C). The 10 hour half-life temperature is shown in the parentheses. The compounds exemplified above can be used alone, or two or more

thereof can be used in combination, as the component [E].

Thermoplastic Resin

A thermoplastic resin can be blended in the matrix resin composition. Examples of the thermoplastic resin include, but are not limited to, polyamide, polyester, polycarbonate, polyethersulfone, polyphenylene ether, polyphenylene sulfide, polyetheretherketone, polyetherketone, polyimide, polytetrafluoroethylene, polyether, polyolefin, liquid crystal polymer, polyarylate, polysulfone, polyacrylonitrile styrene, polystyrene, polyacrylonitrile, polymethyl methacrylate, acrylonitrile-butadiene-styrene copolymer (ABS), acrylonitrile-ethylenepropylene rubber-styrene copolymer (AES), acrylonitrile-acrylic rubber-styrene copolymer (ASA), polyvinyl chloride, polyvinyl formal, polyvinyl butyral, phenoxy resin, and block copolymer. Among these, polyvinyl formal, polyvinyl butyral, polyethersulfone, and phenoxy resin are more preferable because of their excellent solubility in the epoxy resin and resin flow control properties. Polyvinyl formal is more preferable because it has excellent resin flow control properties even when the blended amount is small. One of the thermoplastic resins may be used alone, or two or more thereof may be used in combination.

The content of the thermoplastic resin in the matrix resin composition is preferably 1 part by mass or more, more preferably 2 parts by mass or more, and even more preferably 3 parts by mass or more, and is preferably 30 parts by mass or less, more preferably 20 parts by mass or less, and even more preferably 10 parts by mass or less, with respect to 100 parts by mass of the total of the components [A] and [D] contained in the matrix resin composition. The lower limits and the upper limits of the content of the thermoplastic resin can be optionally combined, and for example, the content is preferably from 1 to 30 parts by mass, more preferably from 2 to 20 parts by mass, and even more preferably from 3 to 10 parts by mass. The content of the thermoplastic resin of 1 part by mass or more is preferable, because the resin flow control properties tend to be favorably exhibited. On the other hand, the content of the thermoplastic resin of 30 parts by mass or less is preferable, because the increase in viscosity of the matrix resin composition is small.

Additional Additive

The matrix resin composition may contain various known additives as necessary within a range where the effects of the present invention are not impaired. Examples of the additives include curing accelerators for epoxy resins, a phosphorus-based flame retardant, a hydrated metal compound-based inorganic flame retardant, other flame retardant aids, silicone oils, wetting and dispersing agents, antifoaming agents, defoaming agents, natural waxes, synthetic waxes, metal salts of linear fatty acids, acid amides, esters, release agents such as paraffins, powders such as crystalline silica, fused silica, calcium silicate, alumina, calcium carbonate, talc, and barium sulfate, inorganic fillers such as glass fibers and carbon fibers, colorants such as carbon black and red iron oxide, and silane coupling agents.

Examples of the phosphorus-based flame retardant include phosphorus-containing epoxy resins, red phosphorus, phosphazene compounds, phosphates, and phosphoric acid esters.

Examples of the hydrated metal compound-based flame retardant include aluminum hydroxide and magnesium hydroxide.

Examples of the other flame retardant aids include antimony compounds, zinc borate, zinc stannate, Mo compounds, ZrO, zinc sulfide, zeolite, and titanium oxide nanofillers.

One of these may be used alone, or two or more thereof may be used in combination.

Method for Producing Matrix Resin Composition

The matrix resin composition is obtained by heating and mixing the respective components described above. Examples of a method for mixing the respective components include a method using a mixer such as a three roll mill, a planetary mixer, a kneader, a homogenizer, or a homodisper.

Viscosity of Matrix Resin Composition

The viscosity of the matrix resin composition at 70°C is preferably 10 Pa·s or more. The viscosity of 10 Pa·s or more makes it possible to produce a uniform film without causing resin repellency on a surface of a base material when producing a film in the "Method for Producing Prepreg" described below. In addition, the shape of the produced prepreg can be retained, and thus, cracking, excessive resin flow during molding, and variation in the fiber content can be suppressed. From the viewpoint of processability such as the tackiness and the draping of the prepreg, the viscosity of the matrix resin composition at 70°C is more preferably 20 Pa·s or more, and even more preferably 30 Pa·s or more. The viscosity of the matrix resin composition at 70°C is preferably 200 Pa·s or less, and more preferably 150 Pa·s or less, because haze can be suppressed when a film is produced, and an unimpregnated portion can be reduced when the reinforcing fiber base material is impregnated with the resin.

For example, the viscosity of the matrix resin composition at 70°C can be increased by using a high molecular weight epoxy resin as the component [D], and the viscosity of the matrix resin composition at 70°C can be decreased by using a low molecular weight epoxy resin. In particular, as long as the structure of the repeating unit is the same, the novolac type epoxy resin has little influence on the mechanical properties of the obtained fiber-reinforced plastic, and thus, the viscosity can be easily adjusted by using novolac type epoxy resins having different molecular weights. In addition, the viscosity of the matrix resin composition at 70°C can be increased by increasing the content of the Thermoplastic Resin described above, and the viscosity of the matrix resin composition at 70°C can be decreased by decreasing the content of the Thermoplastic Resin.

The viscosity as used herein refers to a complex viscosity $\eta^*$ obtained by placing an uncured matrix resin composition on a plate and measuring temperature dependence under the following measurement conditions:

Apparatus: rheometer ("HAAKE MARS 40" available from Thermo Fisher Scientific Inc.)
Plate used: 25 φ parallel plate
Plate gap: 0.5 mm
Measurement frequency: 10 rad/sec
Measurement temperature: from 30 to 130°C
Stress: 300 Pa.

Reinforcing Fiber

The reinforcing fibers can be present as a reinforcing fiber base material, that is, an aggregate of reinforcing fibers in the prepreg, and are preferably in a sheet-shaped. For an orientation of fibers in the reinforcing fiber base material, the reinforcing fibers may be arranged in a single direction or arranged in random directions.

Examples of a form of the reinforcing fiber base material include a woven fabric of reinforcing fibers, a nonwoven fabric of reinforcing fibers, and a sheet in which long fibers of reinforcing fibers are aligned unidirectionally. From the viewpoint that a fiber-reinforced plastic having a high specific strength and a high specific elastic modulus can be molded, it is preferable to use a sheet formed of a bundle of reinforcing fibers in which continuous fibers are aligned in a single direction as the prepreg. From the viewpoint of easy handling, it is preferable to use the woven fabric of reinforcing fibers as the prepreg.

The basis weight of the reinforcing fiber base material can be 10 $g/m^2$ or more and 4000 $g/m^2$ or less.

The prepreg according to one embodiment of the present invention uses carbon fibers as the reinforcing fibers. The use of carbon fibers makes it possible to achieve mechanical properties and weight reduction of the fiber-reinforced plastic to be obtained. In addition, as other reinforcing fibers, for example, glass fibers, aramid fibers, and boron fibers may be included.

A fiber diameter of the carbon fibers is preferably from 3 to 12 μm.

The number of carbon fibers in a carbon fiber bundle is preferably from 1000 to 70000. A sheet-shaped reinforcing fiber base material in which fibers are aligned unidirectionally, using a plurality of carbon fiber bundles may be used, or a sheet-shaped reinforcing fiber base material in which chopped carbon fiber bundles obtained by chopping carbon fiber bundles are scattered may be used.

From the viewpoint of the rigidity of the fiber-reinforced plastic to be obtained, the strand tensile strength of the carbon fibers is preferably from 1.5 to 9 GPa, and the above-described matrix resin composition can have improved adhesiveness to carbon fibers having a strand tensile strength of 5 GPa or more. The strand tensile modulus of the carbon fibers is preferably from 150 to 400 GPa. The strand tensile strength and the strand tensile modulus of the carbon fibers are values measured in accordance with JIS R7601:1986.

Method for Producing Prepreg

The prepreg is obtained by impregnating the reinforcing fiber base material with the matrix resin composition. Examples of a method for impregnating the reinforcing fiber base material with the matrix resin composition include, but are not limited to, a wet method in which the matrix resin composition is dissolved in a solvent such as methyl ethyl ketone or methanol to reduce the viscosity and then impregnated into the reinforcing fiber base material, and a hot melt method (dry method) in which the matrix resin composition is heated to reduce the viscosity and then impregnated into the reinforcing fiber base material.

An impregnation temperature is set depending on the viscosity of the matrix resin composition, but is preferably from 40 to 120°C, and more preferably from 50 to 110°C, from the viewpoint that the curing reaction of the matrix resin composition does not start and the reinforcing fibers need to be sufficiently impregnated with the matrix resin composition.

The wet method is a method in which the reinforcing fiber base material is immersed in a solution of the matrix resin composition, and then pulled up, and the solvent is evaporated using, for example, an oven.

The hot melt method includes a method of directly impregnating the reinforcing fiber base material with the matrix resin composition having a viscosity reduced by heating, and a method of previously applying the matrix resin composition to a surface of a base material such as a release paper to produce a film, then stacking the film on both sides or one side of the reinforcing fiber base material, and heating and pressurizing the stacked product to impregnate the reinforcing fiber base material with the resin. An applied layer obtained by applying the matrix resin composition to the surface of the base material such as a release paper may be used in the hot melt method in an uncured state, or may be used in the hot melt method after the applied layer is cured. According to the hot melt method, there is substantially no solvent remaining in the prepreg.

The content of the matrix resin composition in the prepreg (hereinafter referred to as "resin content") is preferably 10 mass% or more, more preferably 15 mass% or more, and even more preferably 15 mass% or more, and is preferably 60 mass% or less, more preferably 55 mass% or less, and even more preferably 50 mass% or less, with respect to the total mass of the prepreg. The lower limits and the upper limits of the resin content can be optionally combined, and for example, the content is preferably from 10 to 60 mass%, more preferably from 15 to 55 mass%, and even more preferably from 15 to 50 mass%. When the resin content is equal to or more than the lower limit value, the adhesiveness between the reinforcing fibers and the matrix resin composition can be sufficiently ensured, and when the resin content is equal to or less than the upper limit value, the mechanical properties of the fiber-reinforced plastic are further enhanced.

The content of the reinforcing fibers in the prepreg (hereinafter referred to as "fiber content") is preferably 30 vol% or more, more preferably 35 vol% or more, and even more preferably 40 vol% or more, and is preferably 85 vol% or less, more preferably 80 vol% or less, and even more preferably 80 vol% or less, with respect to the total volume of the prepreg. The lower limits and the upper limits of the fiber content can be optionally combined, and for example, the content is preferably from 30 to 85 vol%, more preferably from 35 to 80 vol%, and even more preferably from 40 to 80 vol%. When the fiber content is equal to or more than the lower limit value, the mechanical properties of the fiber-reinforced plastic are further enhanced, and when the fiber content is equal to or less than the upper limit value, the adhesiveness between the reinforcing fibers and the matrix resin composition can be sufficiently ensured.

Fiber-Reinforced Plastic

An embodiment of the present invention relates to a fiber-reinforced plastic. The fiber-reinforced plastic is obtained by curing a prepreg. That is, the fiber-reinforced plastic contains a cured product of the matrix resin composition contained in the prepreg and reinforcing fibers. The cured product may be a cured product of a stack in which one or more prepregs are stacked. For example, a molded article containing the fiber-reinforced plastic is obtained by stacking one or more of the above-described prepregs and then molding the obtained stack, for example, by a method of heating and curing the stack while applying pressure to the stack. In addition to the prepreg described above, a prepreg containing a thermoplastic resin composition and reinforcing fibers or a prepreg containing an epoxy resin composition and reinforcing fibers may be stacked together.

A form of the fiber-reinforced plastic can be appropriately selected depending on the application, and the fiber-reinforced plastic can be, for example, tubular.

Examples of a molding method include a press molding method, an autoclave molding method, a bagging molding method, a wrapping tape method, an internal pressure molding method, a sheet wrap molding method, Resin Transfer Molding (RTM) in which a filament or preform of reinforcing fibers is impregnated with the matrix resin composition and cured to yield a molded article, Vacuum assisted Resin Transfer Molding (VaRTM : vacuum resin impregnation production method), filament winding, and Resin Film Infusion (RFI), but the molding method is not limited to these molding methods. Among these, the autoclave molding method is preferable from the viewpoint that a high-quality fiber-reinforced plastic is easily obtained, and the press molding method is preferable from the viewpoint that high productivity is obtained.

When a fiber-reinforced plastic is produced by the press molding method, it is preferable that a prepreg or a preform produced by stacking prepregs is sandwiched between dies adjusted to a curing temperature in advance, and heated and pressurized to cure the prepreg or the preform. The temperature in the die during the press molding is preferably from 100 to 180°C. In addition, it is preferable to cure the prepreg or the preform under a condition of from 1 to 15 MPa for 1 to 20 minutes.

The present invention will be specifically described below by way of Examples, but is not limited to these Examples. Raw materials used in Examples and Comparative Examples are indicated below.

Raw Material Used

Component [A]

- TEPIC-S: triglycidyl isocyanurate (available from Nissan Chemical Corporation, product name "TEPIC-S").
- MA-DGIC: monoallyl diglycidyl isocyanurate (available from Shikoku Chemicals Corporation, product name "MA-DGIC").
- DA-MGIC: diallyl monoglycidyl isocyanurate (available from Shikoku Chemicals Corporation, product name "DA-MGIC").

Component [B]

- DICYANEX 1400F: dicyandiamide (active hydrogen equivalent: 21 g/eq, available from Evonik Japan Co., Ltd., product name "DICYANEX 1400F").
- Omicure94: 1,1-dimethyl-3-phenylurea (available from PTI Japan Ltd., product name "Omicure94").

Component [C]

- A-9300S: tris-(2-acryloxyethyl) isocyanurate (available from Shin-Nakamura Chemical Co., Ltd., product name "NK Ester A-9300S").
- A-LEN-10: ethoxylated o-phenylphenol acrylate (available from Shin-Nakamura Chemical Co., Ltd., product name "NK Ester A-LEN-10").
- DPE-6A: dipentaerythritol hexaacrylate (manufactured by Kyoeisha Chemical Co., Ltd., product name "Light Acrylate DPE-6A").

Component [D]

- D-1: triglycidyl-m-aminophenol (available from Huntsman Japan K.K., product name "ARALDITE MY 0600").
- D-2: bisphenol-F type epoxy resin (available from Mitsubishi Chemical Corporation, product name "jER 807").
- D-3: solid bisphenol-F type epoxy resin (available from Mitsubishi Chemical Corporation, product name "jER 4007P").
- D-4: cresol novolac type epoxy resin (available from DIC Corporation, product name "EPICLON N-660" or "EPICLON N-680" or "EPICLON N-690").
- D-5: tetraglycidyl diaminodiphenylmethane (available from Mitsubishi Chemical Corporation, product name "jER 604").

Component [E]

- PERCUMYL D: dicumyl peroxide (10-hour half-life temperature: 116.4°C, available from NOF Corporation, product name: "PERCUMYL D").

Thermoplastic Resin

- VINYLEC K: polyvinyl formal resin (available from JNC Corporation, product name "VINYLEC K").

Carbon Fiber

- HR40: available from Mitsubishi Chemical Corporation, product name "PYROFIL HR 40 12M", tensile modulus: 375 GPa, tensile strength: 4.41 GPa.

Examples 1 to 7 and Comparative Examples 1 to 6

Preparation of Matrix Resin Composition

TEPIC-S, MA-DGIC, and DA-MGIC as the components [A], DICYANEX 1400F and Omicure94 as the components [B], A-9300S, A-LEN-10, and DPE-6A as the components [C], D-1 to D-5 as the components [D], PECUMYL D as the component [E], and VINYLEC K as the thermoplastic resin were used to prepare resin compositions as follows.

First, according to each of the compositions shown in Table 1, curing agents (component [B], solid) and D-1 (liquid) were weighed in a container such that the mass ratio of the solid component to the liquid component was 1:1, and the components were stirred and mixed. The respective mixtures were further finely mixed using a three roll mill to yield master batches containing the curing agents (component [B]).

Subsequently, D-1 other than the amount used in each of the master batches containing the curing agents (component [B]) and VINYLEC K, in the compositions shown in Table 1, were weighed in a flask (3 parts by mass with respect to 100 parts by mass of the epoxy resin), and heated and stirred at 140°C using an oil bath to dissolve and mix VINYLEC K. Thereafter, the component [A] and the component [D] were added according to the compositions shown in Table 1, and the respective mixtures were stirred and mixed at 130°C to yield uniform viscous liquids. The viscosity of the matrix resin compositions was adjusted, by appropriately using the component D-4, to such an extent that coatability with a hot melt coater in the production of a prepreg described later could be maintained.

After cooling to 80°C, the component [C] was further added, and the respective mixtures were stirred and mixed to yield uniform viscous liquids. After cooling to about 65°C, each of the master batches containing the curing agent (component [B]) and the component [E] were added, and the respective mixtures were stirred and mixed to yield uncured matrix resin compositions.

Preparation of Cured Product of Matrix Resin Composition

Each of the uncured matrix resin compositions was defoamed under vacuum at about 65°C, and then injected between two glass plates and thus, a plate was molded. This molded product was temperature-raised at 2°C/min, and heated and cured by holding the molded product at an oven atmosphere temperature of 150°C for 120 minutes, and thus, cured products having a thickness of 2 mm and a thickness of 3.2 mm were produced.

Production of Prepreg

A hot-melt coater ("R-HC" available from HIRANO TECSEED CO.,LTD.) was used to coat each of the uncured matrix resin compositions on a release paper at a resin basis weight of 27 g/$m^2$ to produce a resin film. Carbon fibers were wound on the resin film by a drum winding apparatus so as to form a sheet having a fiber basis weight of 125 g/$m^2$. Further, another resin film was pasted to the carbon fiber sheet on the drum winding apparatus. The carbon fiber sheet sandwiched between the two resin films was passed through a fusing press ("JR-600LTSW", available from Asahi Garment Machinery Co., Ltd.) under conditions of a temperature of 100°C, a pressure of 0.4 MPa, and a feed speed of 3 m/min and the carbon fiber sheet was impregnated with each of the uncured matrix resin compositions to yield unidirectional prepregs, each having a prepreg basis weight of 179 g/$m^2$ and a resin content of 30 mass%.

Production of Fiber-Reinforced Plastic

Each of the prepregs was cut into 300 mm × 300 mm, and 18 sheets were stacked such that the carbon fibers were in the same direction, and thus, stacks were obtained. Each of the stack was temperature-raised to 150°C at 2°C/min under a pressure of 0.7 MPa in an autoclave and heated and cured at 150°C for 120 minutes to yield fiber-reinforced plastic panels, each having a thickness of 2 mm.

The produced matrix resin compositions, the cured products thereof, and the fiber-reinforced plastics were subjected to various measurements and evaluations according to the descriptions of the following evaluation methods. The results are shown in Table 1.

Measurement of Viscosity of Resin at 70°C

Each of the uncured matrix resin compositions obtained in the above Preparation of Matrix Resin Composition was placed on a plate, and the temperature dependence of the complex viscosity $\eta^*$ was measured under the following measurement conditions to yield the resin viscosity at 70°C.

Apparatus: rheometer ("HAAKE MARS 40" available from Thermo Fisher Scientific Inc.)

Plate used: 25 φ parallel plate
Plate gap: 0.5 mm

Measurement frequency: 10 rad/sec
Measurement temperature: from 30 to 130°C
Stress: 300 Pa

Measurement of Flexural Modulus and Flexural Strength of Cured Product of Matrix Resin Composition

A test piece having a length of 60 mm and a width of 8 mm was cut out from each of the cured products, each having a thickness of 2 mm obtained in the above Preparation of Cured Product of Matrix Resin Composition. For the test piece, the flexural modulus and flexural strength of the cured product of each of the matrix resin compositions were measured under an environment at a temperature of 23°C and a humidity of 50% RH using a universal tester ("INSTRON 5965" available from INSTRON) equipped with a three point bending jig (indenter R = 3.2 mm, support R = 3.2 mm, and support span L = 32 mm) under a condition of a cross head speed of 2 mm/min. Specifically, the flexural modulus (unit: GPa) was calculated by a secant method over a flexural strain of from 0.05 to 0.25% using a stress-strain curve obtained under the above measurement conditions. A maximum flexural stress of the stress-strain curve obtained under the above measurement conditions was obtained as the flexural strength (unit: MPa).

Measurement of Plane Strain Fracture Toughness KIc of Cured Matrix Resin

A test piece having a length of 44 mm and a width of 10 mm was cut out from each of the cured products, each having a thickness of 3.2 mm obtained in the above Preparation of Cured Product of Matrix Resin Composition. Using this test piece, a test was performed at a cross head speed of 10 mm/min and a deformation mode I (opening mode) using a universal tester ("INSTRON 5965" available from INSTRON) equipped with a three point bending jig (indenter R = 5 mm, support R = 5 mm, support span L = 40 mm) under an environment at a temperature of 23°C and a humidity of 50% RH, a load at the time of fracture was acquired, and plane strain fracture toughness KIc was determined in accordance with ASTM D5045 (2014). An initial precrack was introduced into the test piece by sliding a razor blade on the test piece.

Measurement of 90° Flexural Strength of Fiber-Reinforced Plastic

A test piece having a length of 50.8 mm and a width of 12.7 mm was cut out from each of the panels, each having a thickness of 2 mm obtained in the above Production of Fiber-Reinforced Plastic. At this time, the test piece was cut out such that the long axis direction of the test piece and the orientation direction of the carbon fibers were perpendicular to each other. For the test piece, a 90° flexural strength of each of the fiber-reinforced plastics was measured, in accordance with ASTM D790, under an environment at a temperature of 23°C and a humidity of 50% RH using a universal tester ("INSTRON 5965" available from INSTRON) equipped with a three point bending jig (indenter R = 5.0 mm, support R = 3.2 mm, and support span L = 32 mm) under a condition of a cross head speed of 0.85 mm/min. Specifically, the maximum flexural stress of the stress-strain curve obtained under the above measurement conditions was obtained as 90° flexural strength (unit: MPa).

[Table 1]

| | Raw material | Example 1 | Example 2 | Example 3 | Example 4 | Comparative Example 1 | Comparative Example 2 | Example 5 | Comparative Example 3 | Example 6 | Comparative Example 4 | Example 7 | Comparative Example 5 | Comparative Example 6 |
|---|---|---|---|---|---|---|---|---|---|---|---|---|---|---|
| Component [A] | TEPIC-S | 20 | 20 | 20 | 20 | 20 | 0 | 0 | 0 | 0 | 0 | 20 | 20 | 0 |
| | MA-DGIC | 0 | 0 | 0 | 0 | 0 | 0 | 20 | 20 | 0 | 0 | 0 | 0 | 0 |
| | DA-MGIC | 0 | 0 | 0 | 0 | 0 | 0 | 0 | 0 | 20 | 20 | 0 | 0 | 0 |
| Component [B] | DICYANEX 1400F | 8 | 8 | 8 | 8 | 8 | 8 | 8 | 8 | 8 | 8 | 8 | 8 | 8 |
| | Omicure 94 | 2 | 2 | 2 | 2 | 2 | 2 | 2 | 2 | 2 | 2 | 2 | 2 | 2 |
| Component [C] | A-9300S | 20 | 10 | 0 | 0 | 0 | 20 | 20 | 0 | 20 | 0 | 20 | 0 | 20 |
| | A-LEN-10 | 0 | 0 | 10 | 0 | 0 | 0 | 0 | 0 | 0 | 0 | 0 | 0 | 0 |
| | DPE-6A | 0 | 0 | 0 | 10 | 0 | 0 | 0 | 0 | 0 | 0 | 0 | 0 | 0 |
| Component [D] | D-1 | 20 | 20 | 20 | 20 | 20 | 20 | 20 | 20 | 20 | 20 | 0 | 0 | 0 |
| | D-2 | 0 | 0 | 0 | 0 | 0 | 0 | 0 | 0 | 0 | 0 | 20 | 20 | 20 |
| | D-3 | 20 | 20 | 20 | 20 | 20 | 20 | 20 | 20 | 20 | 20 | 20 | 20 | 20 |
| | D-4 | 40 | 40 | 40 | 40 | 40 | 40 | 40 | 40 | 40 | 40 | 40 | 40 | 40 |
| | D-5 | 0 | 0 | 0 | 0 | 0 | 20 | 0 | 0 | 0 | 0 | 0 | 0 | |
| Component [E] | PERCUMYL D | 0.57 | 0.29 | 0.15 | 0.15 | 0 | 0.57 | 0.57 | 0 | 0.57 | 0 | 0.57 | 0 | 0.57 |
| Radical polymerization initiator | VINYLEC K | 3 | 3 | 3 | 3 | 3 | 3 | 3 | 3 | 3 | 3 | 3 | 3 | 4 |
| Physical properties of matrix resin composition | Viscosity at 70°C [Pa·s] | 64 | 96 | 55 | 69 | 86 | 56 | 36 | 139 | 18 | 83 | 41 | 140 | 27 |
| Physical properties of cured matrix resin | Flexural modulus [GPa] | 4.36 | 4.47 | 4.43 | 4.08 | 4.34 | 4.24 | 4.27 | 4.19 | 4.29 | 4.28 | 4.19 | 4.15 | 4.05 |
| | Flexural strength [MPa] | 214 | 208 | 198 | 199 | 207 | 210 | 222 | 204 | 203 | 199 | 184 | 174 | 178 |
| | KIc [$MPa \cdot m^{1/2}$] | 1.46 | 1.35 | 1.52 | 1.61 | 1.3 | 0.89 | 1.37 | 1.36 | 1.25 | 1.26 | 1.59 | 1.13 | 1.23 |

(continued)

| | Raw material | Example 1 | Example 2 | Example 3 | Example 4 | Comparative Example 1 | Comparative Example 2 | Example 5 | Comparative Example 3 | Example 6 | Comparative Example 4 | Example 7 | Comparative Example 5 | Comparative Example 6 |
|---|---|---|---|---|---|---|---|---|---|---|---|---|---|---|
| Physical properties of fiber-reinforced plastic | 90°Flexural strength [MPa] | 125 | - | - | - | 106 | 96 | 108 | 93 | 113 | 96 | - | - | - |

Examples 1 to 4 and Comparative Examples 1 and 2

As shown in Table 1, Examples 1 and 2, which used TEPIC-S as the component [A] and contained A-9300S as the component [C], exhibited higher flexural strength while maintaining the KIc of the cured product at the same level, as compared with Comparative Example 1 which did not contain the component [C], although the component [D] was the same. In addition, Examples 1 and 2 exhibited larger KIc for the cured products as compared with Comparative Example 2 in which the component [A] was replaced with D-5. Example 3 using A-LEN-10 as the component [C] and Example 4 using DPE-6A as the component [C] also exhibited better flexural strength and KIc of the cured product as compared with Comparative Examples 1 and 2.

Further, the fiber-reinforced plastic of Example 1 also exhibited a higher 90° flexural strength than those of Comparative Examples 1 and 2. The 90° flexural strength of the fiber-reinforced plastic depends not only on the performance of the cured matrix resin but also on the adhesion at an interface between the carbon fibers and the matrix resin composition. That is, it can be said that, when the matrix resin composition contained both the component [A] and the component [C], the adhesion between the carbon fibers and the matrix resin composition was improved, and a high 90° flexural strength was exhibited in addition to the flexural strength and KIc of the cured product.

Examples 5 and 6 and Comparative Examples 2 to 4

As shown in Table 1, Example 5, which used MA-DGIC as the component [A] and contained A-9300S as the component [C], exhibited higher flexural strength while maintaining the KIc of the cured product at the same level, as compared with Comparative Example 3 which did not contain the component [C], although the component [D] was the same. The same tendency was shown in Example 6 and Comparative Example 4 in which DA-MGIC was used as the component [A]. In addition, Examples 5 and 6 exhibited larger KIc for the cured products as compared with Comparative Example 2 in which the component [A] was replaced with D-5.

Further, the fiber-reinforced plastics of Examples 5 and 6 also exhibited higher 90° flexural strength than those of Comparative Examples 2 to 4.

Example 7 and Comparative Examples 5 and 6

As shown in Table 1, Example 7, which used TEPIC-S as the component [A] and contained A-9300S as the component [C], exhibited higher flexural strength while maintaining the KIc of the cured product at the same level, as compared with Comparative Example 5 which did not contain the component [C], although the component [D] was the same. In addition, Example 7 exhibited larger KIc of the cured product as compared with Comparative Example 6 containing no component [A].

Effects of Examples

The flexural strength and KIc of the cured product are usually in a trade-off relationship, but the use of the component [A] and the component [C] in combination could achieve both of the two properties at high levels as described above.

In addition, by using the component [A] and the component [C] in combination, the fiber-reinforced plastic exhibited a high 90° flexural strength as described above. The 90° flexural strength of the fiber-reinforced plastic depends not only on the performance of the cured matrix resin but also on the adhesion at an interface between the carbon fibers and the matrix resin composition. That is, it can be said that, when the matrix resin composition contained both the component [A] and the component [C], the adhesion between the carbon fibers and the matrix resin composition was improved, and a high 90° flexural strength was exhibited in addition to the flexural strength and KIc of the cured product.

Industrial Applicability

By using the prepreg of the form described above, a fiber-reinforced plastic having excellent mechanical properties, particularly, excellent strength in the direction perpendicular to the fiber direction can be obtained. Therefore, according to the present invention, the fiber-reinforced plastic can be widely applied as fiber-reinforced plastic molded bodies having excellent mechanical properties, and as molded bodies ranging from those for sports and leisure applications such as fishing rods, golf shafts, and rackets to those for industrial applications such as aircrafts and automobiles.

## Claims

1. A prepreg comprising a matrix resin composition and carbon fibers, wherein the matrix resin composition includes components [A] to [D]:

   [A] an isocyanuric acid derivative having a glycidyl group, represented by Formula (1):

   [Chem. 1]

   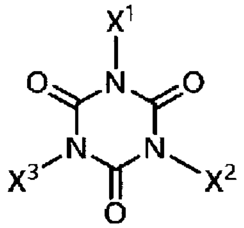

   · · · Formula (1)

   where $X^1$ to $X^3$ each represent a glycidyl group, an allyl group, an alkyl group, or a hydrogen atom, and at least one of $X^1$ to $X^3$ is a glycidyl group;
   [B] a curing agent;
   [C] a compound having a (meth)acryloyl group but no glycidyl group; and
   [D] an epoxy resin excluding the component [A].

2. The prepreg according to claim 1, wherein the prepreg comprises an isocyanuric acid derivative as the component [C].

3. The prepreg according to claim 1 or 2, wherein the prepreg comprises from 50 to 200 parts by mass of the component [A] with respect to 100 parts by mass of the component [C].

4. The prepreg according to claim 1 or 2, wherein the prepreg comprises from 10 to 30 mass% of the component [A] with respect to a total mass of the components [A] and [D].

5. The prepreg according to claim 1 or 2, wherein, in Formula (1), $X^1$ to $X^3$ are all glycidyl groups.

6. The prepreg according to claim 1 or 2, wherein the prepreg comprises a novolac type epoxy resin as the component [D], and the novolac type epoxy resin is contained in an amount of from 20 to 60 mass% with respect to a total mass of the components [A] and [D].

7. The prepreg according to claim 6, wherein the novolac type epoxy resin comprises, as a partial backbone, at least one selected from the group consisting of cresol, bisphenol-A, biphenyl, naphthalene, and a derivative of dicyclopentadiene.

8. The prepreg according to claim 1 or 2, wherein the prepreg comprises from 10 to 40 mass% of a bisphenol type epoxy resin with respect to a total mass of the components [A] and [D].

9. The prepreg according to claim 8, wherein the bisphenol type epoxy resin comprises a bisphenol-F type epoxy resin.

10. The prepreg according to claim 1 or 2, wherein the component [B] comprises at least one selected from the group consisting of dicyandiamide, aromatic amines, ureas, and imidazoles.

11. The prepreg according to claim 10, wherein the component [B] comprises dicyandiamide.

12. The prepreg according to claim 1 or 2, wherein the prepreg comprises 50 mass% or more of a component [B1] having a melting point of 70°C or higher with respect to a total mass of the component [B].

13. The prepreg according to claim 1 or 2, wherein the prepreg comprises from 10 to 40 parts by mass of the component [C] with respect to 100 parts by mass of a total of the components [A] and [D].

14. The prepreg according to claim 2, wherein the component [C] includes an isocyanuric acid derivative having a (meth)acryloyl group, represented by Formula (2):

[Chem. 2]

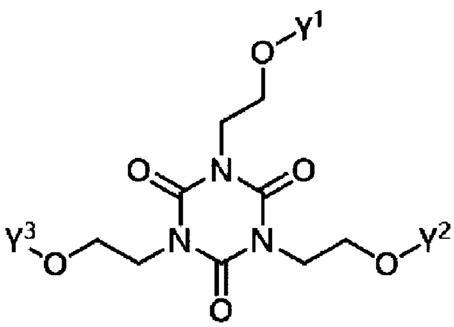

・・・ Formula (2)

where $Y^1$ to $Y^3$ each represent a (meth)acryloyl group or a hydrogen atom, and at least one of $Y^1$ to $Y^3$ is a (meth) acryloyl group.

**15.** The prepreg according to claim 14, wherein, in Formula (2), $Y^1$ to $Y^3$ are all (meth)acryloyl groups.

**16.** The prepreg according to claim 1 or 2, wherein the matrix resin composition further includes a component [E]:
[E] a radical polymerization initiator.

**17.** The prepreg according to claim 16, wherein the component [E] includes an organic peroxide.

**18.** The prepreg according to claim 16, wherein the component [E] has a 10-hour half-life temperature of 70°C or higher.

**19.** The prepreg according to claim 1 or 2, wherein the matrix resin composition has a viscosity of 10 Pa·s or more at 70°C.

**20.** The prepreg according to claim 1 or 2, wherein the prepreg is a unidirectional prepreg in which the carbon fibers aligned unidirectionally are impregnated with the matrix resin composition.

**21.** A fiber-reinforced plastic obtained by curing the prepreg described in claim 1 or 2.

**22.** The fiber-reinforced plastic according to claim 21, wherein the fiber-reinforced plastic is tubular.

## INTERNATIONAL SEARCH REPORT

International application No.
**PCT/JP2024/015547**

**A. CLASSIFICATION OF SUBJECT MATTER**

***C08J 5/24***(2006.01)i; ***C08G 59/26***(2006.01)i; ***C08G 59/40***(2006.01)i
FI: C08J5/24 CFC; C08G59/26; C08G59/40

According to International Patent Classification (IPC) or to both national classification and IPC

**B. FIELDS SEARCHED**

Minimum documentation searched (classification system followed by classification symbols)

B29B11/16; B29B15/08-15/14; C08G59/00-59/72; C08J5/04-5/04; C08J5/24; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2-120312 A (DAINIPPON INK & CHEMICALS INC.) 08 May 1990 (1990-05-08) entire text | 1-22 |
| A | JP 2013-23554 A (DAICEL CORP.) 04 February 2013 (2013-02-04) entire text | 1-22 |
| A | JP 2017-128546 A (SHIKOKU CHEMICALS CORPORATION) 27 July 2017 (2017-07-27) entire text | 1-22 |
| E, X | JP 2024-61086 A (MITSUBISHI CHEMICAL CORPORATION) 07 May 2024 (2024-05-07) claims, examples | 1-22 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/015547**

| Patent document cited in search report | | | Publication date (day/month/year) | Patent family member(s) | Publication date (day/month/year) |
|---|---|---|---|---|---|
| JP | 2-120312 | A | 08 May 1990 | (Family: none) | |
| JP | 2013-23554 | A | 04 February 2013 | (Family: none) | |
| JP | 2017-128546 | A | 27 July 2017 | (Family: none) | |
| JP | 2024-61086 | A | 07 May 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023125417 A
- WO 2022196624 A